# EUROPEAN PATENT APPLICATION

(11) **EP 4 687 052 A1**
(43) Date of publication of application: **04.02.2026**
(21) Application number: 25185393.3
(22) Date of filing: 26.06.2025
(51) Int. Cl.: G06F 18/214, G06V 10/774, G06V 20/13

(54) **LABEL TRANSFER FOR SPACIALLY REGISTERED IMAGES TO AUGMENT A TRAINING SET OF IMAGES**

(30) Priority: 30.07.2024 US 202418788912
(71) Applicant: Maxar Intelligence Inc., Westminster, Colorado 80234 (US)
(72) Inventor: Stackpole, Matthew W., Erie, 80516 (US)
(74) Representative: ARC-IP

(57) **Abstract**

In some embodiments, a method for training a machine learning device includes: ascertaining geographic location information of at least one portion of a first image associated with a label; associating with the label a second image including at least a portion having substantially the same geographic location information as the at least one portion of the first image; optional alignment or coregistration of the first and second image to maximize mutual information overlap; forming a training dataset comprising the first and second images as input images and the label that the first and second images are associated with as outputs; optional binary categorization and curation of the resulting training dataset to ensure accuracy; and training the machine learning model using the augmented dataset.

## Description

### Cross-Reference to Related Application

This application claims the benefit of, and priority to, U.S. Patent Application No. 18/788,912, filed on July 30, 2024. The entire disclosure of the above application is incorporated herein by reference.

### Technical Field

This disclosure relates generally to feature extraction and data augmentation. In particular, within the context of remote sensing imaging systems, this disclosure relates to techniques for generating training data generally intended to improve the performance of feature or pattern recognition in cases where the data representation of that feature is scarce or cumbersome to acquire.

### Background

Labeling or annotating of features, such as roads, railroads, building, natural features, and other structures, within a remote sensing image of a geographic area allows analysts to quickly extract useful insights from the imagery, such as locations of and patterns within human actions. Machine learning can be used to assist in, or automate, the labeling process. Most machine learning algorithms require large quantities of training data, which often consists of pairs of images and labels. The labels may be classification categories, such as water, forest, industrial building, parking lot, etc., or segmentation labels, such as polygon or raster labels, to denote regions within the images. The creation of these labels is very human labor-intensive and is often one of, if not the, most expensive part of machine learning model development.

Data augmentation is a training data generation technique used in certain machine learning applications. In general, data augmentation involves generating training data based on available training data. Information from available training data can make the acquisition of additional training data less time- and/or resource-intensive than creating new labels on new inputs/images. For example, data augmentation can be achieved by applying a transformation, such as a flip or rotation or other modifications, to an available training image (and label if the label is also a raster), such as an image acquired by a camera and associated with a label based on human visual inspection, to generate one or more additional training images and labels for better generalization performance. In such an example, the knowledge that the available training image is a correctly labeled image enhances the likelihood that augmented training images are also correctly labeled and suitable for use as training data. Label accuracy for the augmented image also relies on assumptions that the feature of interest is relatively stable, e.g., a building will likely be in the same place a week later, but a car very likely would not.

However, the use of data augmentation is not without deficiency. For example, data augmentation improves trained model performance more when the augmentations resemble real variations that are present in data. For example, while some types of flips or rotations or other augmentations may result in additional useful training data, others would be unsuitable. For example, given a perspective view of a commercial airliner in flight, a reflection across the vertical axis resembles a real variation where the plane is traveling in the opposite direction, whereas a reflection across the horizontal access may not since most commercial airliners do not typically fly inverted.

More generally, machine learning models tend to be more effective, e.g., label structures in captured images more accurately, with more correctly labeled training data. However, acquiring large amounts of training data can time-consuming and/or resource-intensive. Efforts are ongoing to more efficiently supply training data.

### Summary

According to one aspect of the present disclosure, a method for training a machine learning device includes: ascertaining geographic location information of at least one portion of a first image associated with a label; associating with the label a second (or more) image(s) including at least a portion having substantially the same geographic location information as the at least one portion of the first image; forming a training dataset comprising the first and additional images as inputs and the associated labels as outputs; and training the machine learning device using the dataset to replicate the labels/outputs. This process of creating a new image/label pair by associating a different image of the same area with the label is what may be referred to as "natural augmentation."

According to another aspect of the present disclosure, model performance from natural augmentation of images and label data is improved with the application of image coregistration. For example, remote sensing imagery suffers from some measure of locational inaccuracy. This can be due to inaccuracies in the sensor location or errors in the camera model or elevation model used for orthorectification. Better alignment of imagery means better alignment of their labels. This is most apparent when the labels involve designated regions of the image, however even in the case of categorical labels, misalignment can result in relevant information from one image to not be present in another misaligned image. Embodiments of the method of natural augmentation benefits from the use of co-registered/aligned imagery. Therefore, embodiments include an (optional) alignment step for the input images.

According to another aspect of the present disclosure, a computer readable medium that stores a set of instructions which when executed perform a method for training a machine learning device includes: ascertaining geographic location information of at least one portion of a first image associated with a label; associating with the label a second image including at least a portion having substantially the same geographic location information as the at least one portion of the first image; forming a training dataset comprising the first and second images as input images and the label that the first and second images are associated with as outputs; and training the machine learning device using the dataset.

According to another aspect of the present disclosure, a system for augmenting a label includes: a memory storage; and a processing unit coupled to the memory storage, wherein the processing unit is operative to execute a set of instructions read from the memory storage to: ascertain geographic location information of at least one portion of a first image associated with a label; associate with the label a second image including at least a portion having substantially the same geographic location information as the at least one portion of the first image; form a training dataset comprising the first and second images as input images and the label that the first and second images are associated with as outputs; and train the machine learning device using the dataset.

### Brief Description of Drawings

The features and advantages of the example embodiments of the invention presented herein will become more apparent from the detailed description set forth below when taken in conjunction with the following drawings.
Fig. 1A illustrates a flowchart for a process for natural augmentation of training data according to some embodiments;
Fig. 1B illustrates a system for augmenting image dataset according to some embodiments;
Fig. 2 illustrates modules of a satellite device within the system of Fig. 1B;
Fig. 3A illustrates a training image set with standard data augmentations such as flips and rotations; the associated labels, roads in this example, are also shown;
Fig. 3B illustrates a training label set, each of the labels associated with a respective training image in the training image set shown in Fig. 3A, according to some embodiments.
Fig. 4 illustrates modules of the stack creator of the system of Fig. 1A;
Fig. 5 illustrates a training image set with standard data augmentations such as flips in addition to natural augmentations, such as the example illustrated in Fig. 1A within the system of Fig. 1B;
Fig. 6 illustrates a stack generator output of the system of Fig. 1;
Fig. 7 illustrates a method of augmenting training data according to some embodiments.

### Detailed Description

The example embodiments of the invention presented herein are directed, but not limited, to methods, systems and computer program products for correlating satellite images to ground coordinates. Examples are now described herein in terms of an example remote sensing imagery of features to include roadways. This description is not intended to limit the application of the example embodiments presented herein. In fact, after reading the following description, it will be apparent to one skilled in the relevant art(s) how to implement the following example embodiments in alternative embodiments (e.g., involving any form of imagery and/or labels other than roads).

Illustrative examples of the disclosure are described below. In the interest of clarity, not all features of an actual implementation are described in this specification. It will of course be appreciated that in the development of any such actual example, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

Unless otherwise defined, all terms (including technical and scientific terms) used herein have the same meaning as commonly understood by one of ordinary skill in the art of this disclosure. It will be further understood that terms, such as those defined in commonly used dictionaries, should be interpreted as having a meaning that is consistent with their meaning in the context of the specification and should not be interpreted in an idealized or overly formal sense unless expressly so defined herein. Well known functions or constructions may not be described in detail for brevity or clarity.

The following section defines some of the terms used in this disclosure. The definitions provided below are intended to be consistent with common usage in the field of remote sensing, including satellite imaging, and are for clarification only. However, to the extent that these definitions conflict with common usage, the definitions below are intended to control.

"Image" or "remote sensing image" is used throughout this disclosure to refer to an image acquired from above the earth's surface looking down, such as from a balloon, airplane, or satellite-mounted camera. Images obtained by any of these types of cameras are intended to be within the scope of "image" or "remote sensing image" as used throughout this disclosure. It should also be understood that while reference is made herein to the images of earth, images could be obtained of any other object, such as other celestial bodies (Mars).

Labeling refers to associating specific attributes, classes, or regions to elements within satellite imagery. It involves the process of annotating or tagging various objects, features, or regions of interest present in the satellite images with descriptive labels or identifiers. Labels may be classes (e.g., "road"), numerical values representing classes (e.g., 1 = "road", 2 = "building"), or raster images with pixel values representing classes. These labels may represent different land cover types, infrastructure objects, natural phenomena, or any other relevant information that can be extracted from the satellite imagery. Labeling facilitates the creation of labeled datasets that are used to train and develop machine learning algorithms and models. These models can then automate the interpretation and analysis of satellite imagery, accelerating the analysis process and providing valuable insights at scale. Accurate labeling ensures consistency and reliability in satellite image interpretation, reducing ambiguity and improving the quality of results.

Alignment refers to aligning images to each other relative to a common reference frame or coordinate system. Alignment involves the process of spatially adjusting multiple images obtained from different sensors, platforms, or time points to ensure that they are overlaid and geometrically consistent.

Coordinates refer to a spatial reference system that enables accurate positioning and (geo)location of imagery data. A coordinate system may assign unique numerical values, such as latitude and longitude, to locations on the Earth's surface, allowing for precise identification and measurement of features or objects within the images.

Orthorectification is a process in satellite image interpretation that corrects geometric distortions caused by terrain relief, sensor viewing angles, and satellite motion. It transforms the image to a geometrically accurate representation of the Earth's surface, enabling precise measurements, mapping, and analysis. By eliminating perspective distortions and relief displacements, orthorectification ensures that objects in the image are correctly located and undistorted. This accuracy is vital for applications such as land cover mapping, urban planning, and environmental monitoring, where precise measurements are crucial. Orthorectified images can be overlaid onto maps or other geospatial datasets, facilitating integration with other spatial information for better analysis and decision-making. Overall, orthorectification plays a fundamental role in satellite image interpretation by providing a reliable and geographically accurate representation of the Earth's surface, enhancing the quality and usability of satellite imagery data. Additionally, when combining multiple images that may be taken at different viewing angles, the images can be combined or compared by orthorectification or otherwise manipulating the multiple images to a common viewing angle.

Machine learning model refers training a system (machine, architecture, or algorithm) to find patterns in data or make predictions through repeated exposure to example (training) data with minimal human intervention.

Machine learning training module refers to a device or system training a machine learning model, or architecture, which is a framework for making decisions based on specific input. The rules or parameters of the framework are learned through repeated exposure to training data. Examples of machine learning architectures include convolutional neural networks (CNNs), transformer models, and random forest models. Machine learning architectures receive input data and output labels to learn and/or predict patterns, such as patterns in input images.

Training data refers to data used in the machine learning training module to train a machine learning model. Training data consists of model input, such as an image, and associated output, such as an image label. Training a machine learning model involves optimizing parameters of the model, such as weights and biases of a CNN or splitting parameters and values for a decision tree, through iterative exposure to training data examples. Optimizing model parameters results from comparing the model's current output from an input to the associated output (label) and adjusting the model parameters in order to optimize an objective/cost/energy function.

Data augmentation refers to increasing the amount of training data based on the available training data. In some cases, augmentation involves the use of image processing techniques, algorithms, or technologies to add supplementary data, enhance image resolution, improve color accuracy, remove noise or artifacts, extract meaningful features, or overlay relevant contextual information onto the original satellite imagery. Augmentation techniques in some cases augment the available training data by adding or modifying certain aspects while preserving the underlying content. Augmentation supports the development and training of machine learning models for satellite image interpretation. By augmenting the training dataset, a larger, more diverse set of training images can be used to train machine learning models, improving the models' robustness and generalization capabilities. Examples of augmentation include mirroring of an image and/or the addition of artificial noise to an image, as well as adding images, collected over time and/or under difference conditions, of the same object, as described in certain examples disclosed in this disclosure.

Temporal stack refers to a collection of images taken of a region or object at different times. Temporal stack facilitates the comparison, and extraction of meaningful insights or patterns from the data, enabling improved understanding, prediction, or decision-making. Temporal stacks are an example of more general collections of images taken of a region or object. For example, a more general collection of images can include multiple images of the same region or object by two or more cameras whether or not at the same time.

Temporal data represents the individual layers or elements within a temporal stack, each corresponding to a specific time instance. Temporal data, and more generally image data from multiple images of the same region or object, may be included within a stack, or set, of training data for training a machine learning model.

Stack creator refers to a module which is configured to arrange a stack, or set of training data (inputs and outputs) to be provided to a machine learning training module.

An aspect of the present disclosure relates to using a machine learning training module to augment training data. A machine learning training module uses a set of images and associated labels, together called the training dataset, to acquire or improve its ability to identify features in a given image. Some images in the training dataset may be obtained by conventional means, such as photographic images acquired by cameras, while others may be generated by augmenting existing image set. Augmented image sets may be used to increase the size of the training dataset and thus better train the machine learning model in the labeling of features.

In some embodiments, a process for natural augmentation of training datasets includes the following steps: (a) identifying a feature (e.g., a specific building) in a first image and associating the feature (or first image) with a label; (b) based on certain known relationship between the first and second (or additional) images, such as the same location (e.g., longitude and latitude for all images), assigning the same label to a second image (or additional images), or a portion(s) thereof, without first identify the feature; and (c) using the two (or more) images as training images with shared labels to train a ML module or model. For example, given an extensive collection of temporal geographic location information with precision geo-registration (alignment between features photographed over time), there may be a high degree of confidence that the same location in two images acquired at two different times that are not two far apart will have the same feature (e.g., a building). Therefore, multiple real images in the collection possession can be automatically assigned the same label to be included in training datasets.

In some embodiments, the training data are "curated," for example, by a curator making a determination as to whether a label automatically assigned to an image is correct. Even if curation is involved, the process is simplified, as the curator only needs to made a judgment as to whether the image is good or bad and not to identify features.

When an image from the satellite is initially taken, it may be taken at angle other than directly down, called the off-nadir angle. The image may be transformed to simulate a top-down/nadir/orthogonal view through orthorectification. Orthorectification may be used to update the images taken by the satellite and the features within to the same effective viewing angle so they may be more easily compared or processed, in some aspects. Certain features within the orthorectified image(s) may be labeled and stored as an initial map data structure. While orthorectification is a common way to normalize the images to one another for easy comparison by software tools, it should be understood that other angles could be used instead of strict orthogonal perspectives.

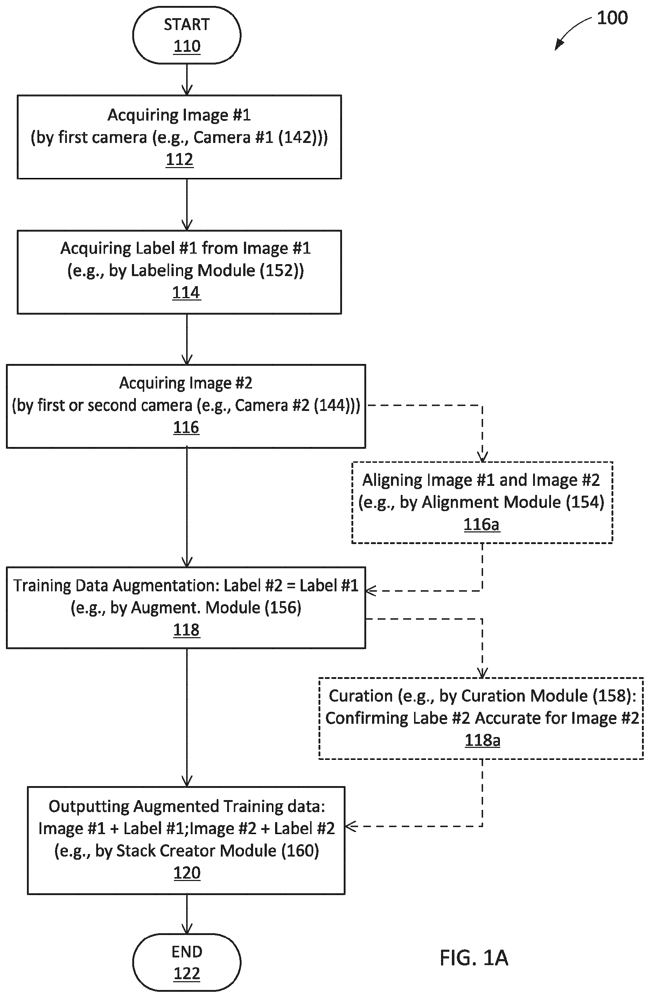

Fig. 1A illustrates an example process 100 for generating a natural augmented training dataset. The process 100 begins at 110. A first image (Image #1) is acquired 112, for example, by a first camera aboard a satellite. The first image is then labeled 114. For example, a user examining the first image may determine that the image is of a building and assigns a label signifying a building to the first image.

In another part of the process 100, a second image (Image #2) of a known relationship to the first image is acquired 116. For example, the second image can be of the same object or region as that of the first image. The second image may be acquired by the first camera or a second, different camera. Moreover, although the second image is shown as acquired after the labeling of the first image in the example shown in Fig. 1A, the first and second (and any additional) images can be acquired in any time sequence.

Next, and optionally, the first and second images are mutually aligned, or coregistered, 116a. Although the alignment step 116a is illustrated as being carried out after labeling of the first image, alignment 116a can be carried out before labeling of the first image in other embodiments. Next, the second image, whether or not aligned with the first image in an alignment step 116a, is assigned 118 the same label as the first image.

Next, and optionally, in a curation step 118a, a determination is made, for example, by a user as to whether the labeling of the second image by the label of the first images is correct. If the labeling is determined to be correct, the second image with the label of the first image assigned to it is accepted; otherwise, the second image is rejected. At curation step 118a, the second image can be thought of as a candidate for coregistration. The second image can be accepted or rejected for coregistration based upon a degree of similarity between the first image and the second image. Additional images can be treated as candidates for coregistration in the same way, with a degree of similarity between the subsequent images and the previous images used to curate the coregistration of the images, either accepting or rejecting the second or subsequent images based on the degree of similarity.

Next, a training dataset that includes the first and second images (the second image having been accepted if the optional curation step 118a is carried out), both labeled by the label of the first image, is outputted 120 to a machine learning training module to training the model. The process 100 ends at step 122.

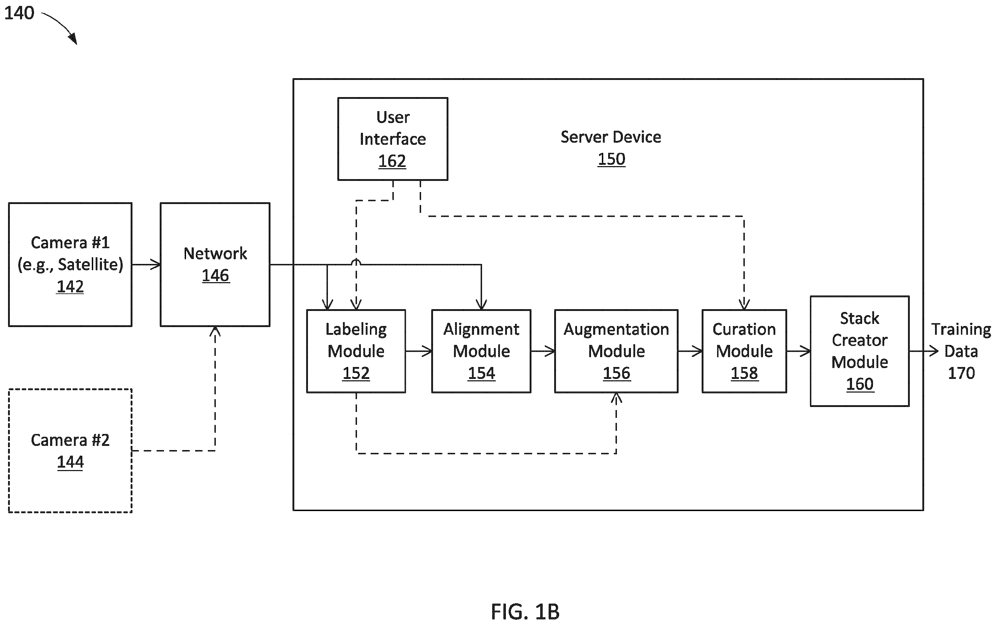

Fig. 1B illustrates an example system 140 for generating a naturally augmented training dataset 170 according to some embodiments. In this example, the system 140 includes a first camera (Camera #1)142, such as one aboard a satellite; optionally a second camera (Camera #2) 144 and optionally additional cameras (not shown); a network 146; and a server device 150. The server device 150 includes a labeling module 152; an alignment module 154; an augmentation module 156; a curation module 158; and a stack creator module 160. The service device 150 in this example further includes one or more user interfaces 162, which in some embodiments enable users to perform tasks such as labeling images (e.g., Image #1) and curating images (e.g., Image #2) in the naturally augmented training data. The server device 150 outputs, in this example from the stack creator module 160, training data set 170 that includes naturally augmented training data, to a machine learning training module.

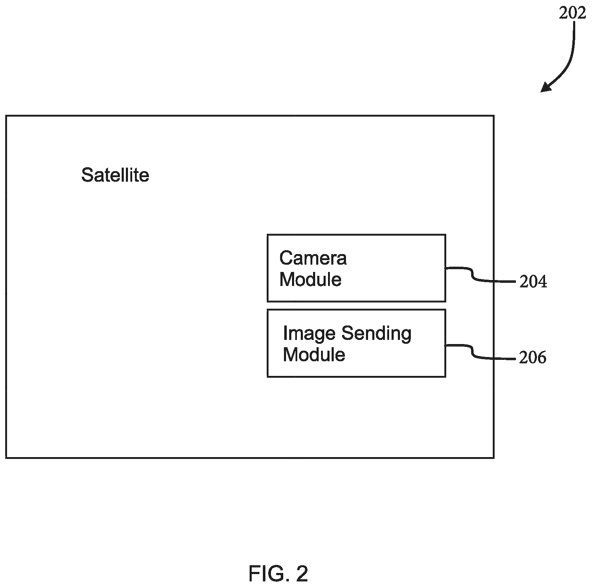

As noted above, one or more cameras can be mounted on a remote sensing system, such as a satellite. As schematically illustrated in Fig. 2, a satellite 202 in one example includes a support structure, which can be any of a variety of remote imaging device support structures, such as a space station or communications or imaging satellite as shown, or a platform that is not fully in space such as a balloon, or an airplane, drone, glider, or the like, or any structure adapted to support one or more imaging devices (e.g., cameras) at an adequate distance to image an intended region or object. The satellite 202 can be disposed at any suitable elevation and speed relative to the ground (e.g., whether the satellite 202 is in low earth orbit, geosynchronous orbit, in the atmosphere, etc.).

The network 146 in the example shown in Fig. 1B provides a data connection between the camera(s) 142, 144 and the server device 150. In some examples, the network 146 can be, or include, a local area network, a wide area network, the Internet, or a mixture thereof. A variety of communication protocols can be used. Although only a single server device is shown, the system 140 can accommodate hundreds, thousands, or more of computing devices.

The server device 150 in some examples includes a network of computers or a single computer with a processor. The server device 150 receives images from the camera(s) 142, 144 or, in some cases, other sources. The server device 150 in this example allows for received images and/or images from other source to be used as learning images, or training datasets. The training datasets are used in the machine learning training module to build or enhance the machine learning model's ability to label images. In this example, the server device 150 has various modules that assist in the generation of training datasets. For instance, the modules may be components executing programs or software functions within the server device 150.

In some embodiments, the server device 150 includes a labeling module 152, which receives at least a first image (e.g., Image #1) from the camera(s) 142, 144, or elsewhere, via the network 146 and labels the image one or more features within the image. In this example, the labeling module 152 outputs the label information to the augmentation module 156, either directly or through the alignment module 154. The labeling module 152 in this example labels the first image based a user input through the user interface 162. For example, a user may visually inspect the first image and identify a feature (e.g., a building) in the first image and provides a user input to the labeling module 152 to provide a label indicative of the feature for the first image. In other embodiments, the labeling of the first image can be provided or assisted by trained machine learning devices.

The alignment module 154 in this example receives the first image and one or more additional images, including a second image (e.g., Image #2), from the network 146 either directly or through the labeling module 152. The alignment module 154 aligns the images to each other relative to a common reference frame or coordinate system. The alignment module 154 spatially adjusts the images to ensure that they are overlaid and geometrically consistent. Bundle adjustment is an example of an image alignment algorithm. In other embodiments, the images are pre-aligned as received by the server device 150. For example, pre-aligned images may be available from collections of satellite images taken over time.

The augmentation module 156 in this example includes a module running a program for creating training data to be used in the machine learning training module. In some embodiments, the availability of images known to be well aligned, or registered with one or more images known to be correctly labeled is advantageously used to generate additional training images without significant additional resources and/or time. For example, in some embodiments, given a first image of an object (e.g., a specific building) that has been correctly associated with a label (e.g., with the building correctly identifies based on, for example, human inspection of the image), a second image that is known to be registered (i.e., aligned to a common observational frame of reference) with the first image to an acceptable degree of precision is automatically taken as an image of the same object and associated with the same label and automatically labeled with the label of the first image by the augmentation module 156 and used as training data.

In the example shown in Fig. 1B, the second images, automatically labeled, is received by the curation module 158 from the augmentation module 156 and inspected by a user through the user interface 162 to an extent that is less than what is required to create a label afresh. For example, a human inspector of the second image needs only to determine whether the automatically assigned label is acceptable, and the second image is used as a training image only if the label is determined to be acceptable. The training images and labels in the augmented training data are thus efficiently curated. In both curated and un-curated cases, additional training images, which may have been taken from a variety of distances and perspectives, under a variety of conditions, including lighting, season, and image resolution, are obtained without the need to create additional labels.

As an example, where a large number of satellite images are available, each accompanied by a variety of image data, such as the date and time of the image, the position and angle of the camera (e.g., on a satellite), the camera setting, software, such as precision 3D registration software available from Maxar Technologies, Westminster, Colorado, can be used to precisely register (referred to as "georegistration" in certain geospacial data applications) a collection of images with each other for which a label has been created based on human inspection of one image or automatically assigned and confirmed by human inspection. The images in precise registration with the training image can be automatically assigned the label of the training image, for example by the natural augmentation module 156 and queued into a set, or "stack," by the stack creator module 160, optionally after curation.

The augmentation module 156 may augment training data by various methods. For example, the augmentation module may combine a natural augmentation process utilizing available precision georegistered images, as described above, with mirroring to create additional training images. Other nonlimiting examples include, stretching or shrinking the image, and/or the addition of noise to the image. Each augmentation creates an additional training data usable to in the machine learning training module.

The stack creator module 160 in this example receives the augmented training set as training data from the augmentation module 156. The stack creator module 160 groups the training data as a stack or, more generally, in a sequence. The images of the training data can be input into the machine learning training module in sequence arranged in the stack. The stack generated by the stack creator module 160 allows learning images to provide temporal data of changes within each learning image. The stack creator module 160 in this example outputs augmented training dataset 170, which includes the first and second images and their respective labels, to a machine learning training module.

Machine learning training modules using the training data set 170 can train any form of machine learning or predictive modeling. For example, the machine learning model can be a convolutional neural networks (CNNs, transformer model, or random forest model.

Referring to Fig. 2, the satellite 202 may include a camera module 204 and an image sending module 206. The camera module 204 can generate an image by operating the camera to take an image. The image sending module 206 may operate to communicate with the network 146 and send an image taken by the camera module over the network 146 to the server device 150.

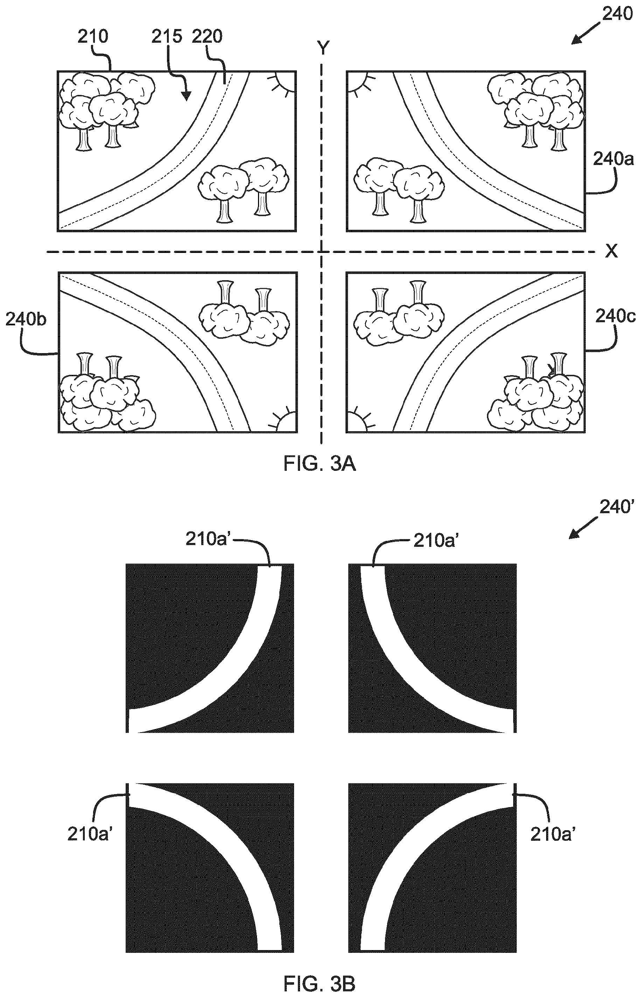

Fig. 3A illustrates examples of further augmentation of training dataset 240 based on a training image generated by utilizing georegistered images as described above. The augmentation image set 240 includes at least one first training image 210, which is generated by assigning the image a label associated with a known valid training image with which the image 210 is georegistered. The augmentation image set 240 in this example further includes training images 240a-c. The first image 210 includes a geographic location information 215, and a feature, such as a segment 220 of a road. The geographic location information 215 can be a satellite image that is two-dimensional, in some contexts, though in others it may be combined with other input data such as a Digital Elevation Model (DEM) or the like, to have higher-dimensional content as well. In some embodiments, the DEM and the two-dimensional satellite image data are combined using known techniques to form three-dimensional image data 210.

In this example, training image 240a may be generated by mirroring the training image 210 across the Y-Z plane; training image 240b may be generated by mirroring the training image 210 across the X-Z plane; and training image 240d may be generated by further mirroring the training image 210a across the X-Z plane. It is noted that training data are not just the training images but the training images with respective labels. Training data set augmentation occurs to both. For example, starting with training data 240' that includes the training image 210 and associated label 210' (see Fig. 3B), which in this example is an abstract road segment, the augmented training dataset not only includes the training images 210', but also the associated labels 210a-c', each of which is generated by the same mirroring operation that is applied to the respective training image.

In the example augmentation image set 200, the satellite 202 may take the at least one initial image (not shown) of the geographic location information 215 which may be transferred through the network 146 to a server device 150. The initial image may include the feature 220 to be labeled. In this example, the initial image may be a picture of a road and indication of the picture being associated with a label indicative of a specific section 220 of the road.

A first augmented training image 210 is generated from an image geo-registered with the initial training image as described above. In the example augmentation image set 200, the label is of a single feature 220. In other examples, the feature 220 may be multiple features 220 of the same type or multiple different features 220. For instance, feature 220 could be a road, structure, or landmark. In other examples, features could be a road and a structure. In some examples of the present disclosure, the label may be created manually by a person utilizing a software program.

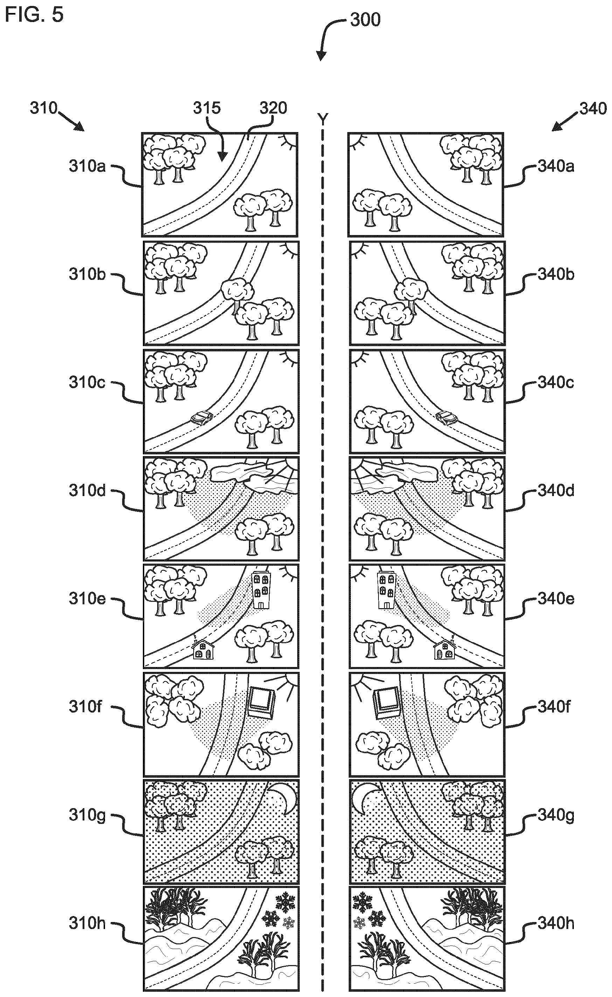

The example server device 150 includes the augmentation module 156. The augmentation module 156 takes the first training image 210 and transforms the first training image 210 to create additional learning images 240a, 240b, and 240c. Augmentation may be the mirroring of the first image 210 or may be the adding of artificial noise to the first training image 210. In other examples, the learning images 240a, 240b, and 240c may include training images created from additional first training images 210 of the same feature 220. In some examples, the first training image 210 includes multiple first training images 310 (shown in Fig. 5) which can be used to create a plurality of additional training images 340 based on multiple sets of learning images 310 from the different first images 210. In the example shown in Fig. 5, the first training images 310 themselves are generated by automatically labeling (optionally with curation) images geo-registered with the initial training image, as described above.

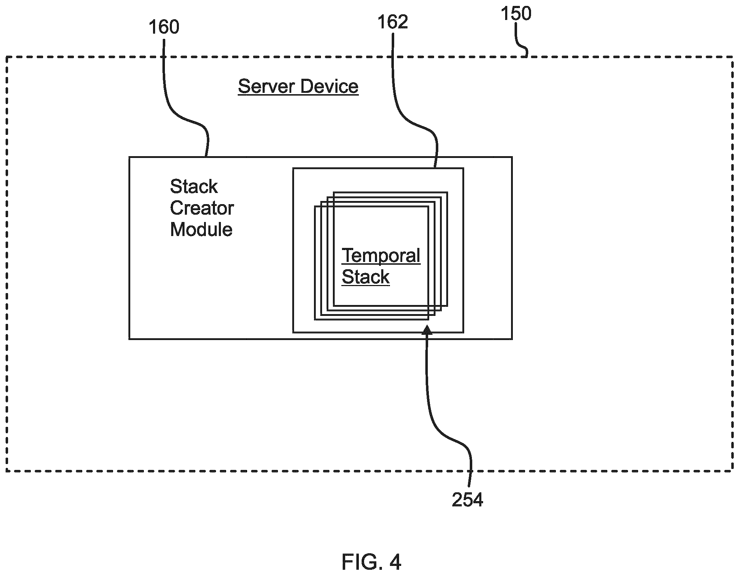

Referring to Fig. 4, the stack creator module 160 may receive the training images labels and form a training dataset 250 within memory of the stack creator module 160. The training dataset is a collection of the training images and associated labels, which provide information on identifying the feature 220 of the initial map data structure. The stack creator module 160 may transfer the stack to the machine learning training module. Each image within the temporal stack 254 may include different conditions which obscure or change the visibility of the feature 220 within the respective image.

Machine learning training modules receive training data, such as an augmented training set, for training to enhance its ability to automatically label features, such as the feature 220. The enhanced labeling capabilities results in an improved map data. For instance, training images with different imaging conditions (Fig. 5), and the additional training images formed by modifying those training images, improve the ability of machine learning model to label features imaged under different conditions.

Figs. 5a-5h illustrate in more detail an example augmentation image set 300. The augmentation image set 300 may include first learning images 310 and a plurality of additional learning images 340. The first learning image 310 includes geographic location information 315 and the feature 320. In this example the first learning images 310 includes a set of first learning images 310a-310h, which may be generated by automatically labeling georegistered images, as described above. Each of the first image 310 may also have been acquired under various conditions, such as time of day, lighting, shadows, clouds, weather effects, angle of imaging, resolution of the image, and structures or objects other than the feature 320 which block the feature 320. These conditions may affect the visibility of the feature 320 for labeling. Further, the first images 310 provided may also indicate changes in the geographic location information 315 over time which affect the accuracy of label by the machine learning model.

The example first image 310a may be mirrored across the Y axis to generate an augmented learning image 340a. In the example first image 310a, the feature 320 is shown unobstructed on a sunny or high visibility day. The plurality of learning images 340 may be generated by augmenting the first image 310. As described with respect to Fig. 2, in some instances the first image 310 may be augmented by alternatively being mirrored over an X axis. In other instances, the first image 310 may be augmented by being mirrored over both axes X,Y. When this is done, new data with the same conditions are generated. Each learning image 340 may include different combinations of conditions. For instance, a first image 310a may include a feature 320 which is not visibly obstructed and taken with a substantial amount of sunlight. In other instances, a first image 310b including a tree obstructing the feature 320, such as a road (see Fig. 3b). Another example first image 310c shows a vehicle obstructing the feature 320. Some examples, such as the example first image 310d, may include shadows or other conditions which do not directly obscure the feature but may visibly alter the visibility or recognition of the feature 320. In the example of first image 310e, a building obstructs visibility of feature 320 at a first angle. The example first image 310f shows the first image 310 taken from a second angle and the same building obstructs the feature 320 in a differently by casting only a shadow on the feature 320. As such, each difference in angle of the first image 310 may be considered a different first image 310 which can be mirrored to create a different learning image 340 when mirrored. For instance, learning image 310d is different from learning image 340f based on difference in the lighting conditions of the image.

Although example conditions are described individually in Figure 5, it is understood the first image 310 may include one or more of the conditions. Further, the image may include multiple features 320 or a single feature 320. For instance, two roads may an intersection to be labeled as an initial map data structure. In other examples, the feature 320 could be multiple buildings. Additionally, images may include other effects or structures which are not to labeled. The initial map data structure may be used to align the feature 320 better during orthorectification.

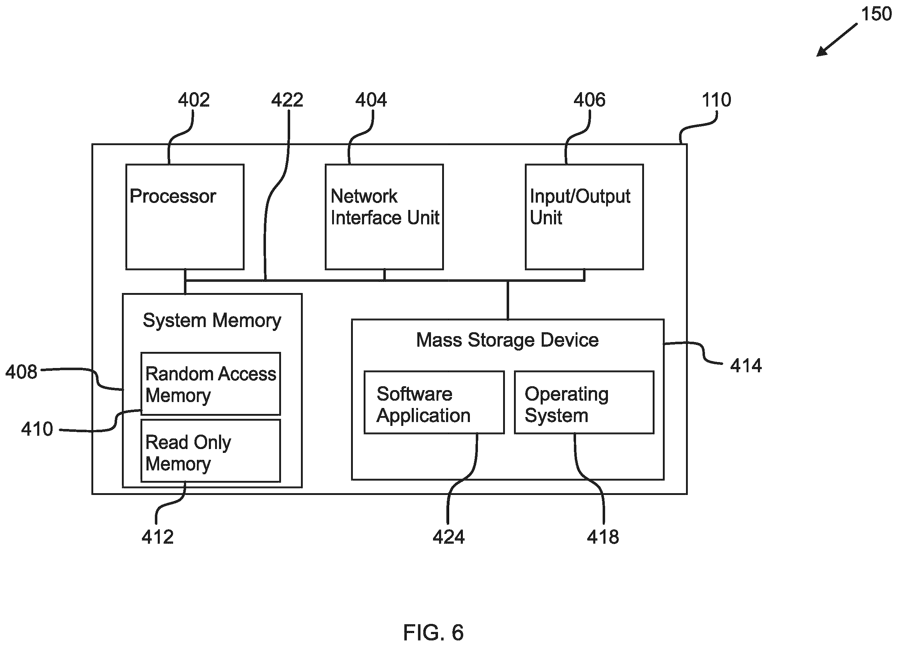

Fig. 6 illustrates the example server device 150, which provides the functionality described herein, can include at least one central processing unit ("CPU") 402, a system memory 408, and a system bus 422 that couples the system memory 408 to the CPU 402. The system memory 408 includes a random-access memory ("RAM") 410 and a read-only memory ("ROM") 412. A basic input/output system containing the basic routines that help transfer information between elements within the server device 150, such as during startup, is stored in the ROM 412. The server device 150 further includes a mass storage device 414. The mass storage device 414 can store software instructions and data. A central processing unit, system memory, and mass storage device similar to that shown can also be included in the other computing devices disclosed herein.

The mass storage device 414 is connected to the CPU 402 through a mass storage controller (not shown) connected to the system bus 422. The mass storage device 414 and its associated computer-readable data storage media provide non-volatile, non-transitory storage for the server device 150. Although the description of computer-readable data storage media contained herein refers to a mass storage device, such as a hard disk or solid-state disk, it should be appreciated by those skilled in the art that computer-readable data storage media can be any available non-transitory, physical device, or article of manufacture from which the central display station can read data and/or instructions.

Computer-readable data storage media include volatile and non-volatile, removable, and non-removable media implemented in any method or technology for storage of information such as computer-readable software instructions, data structures, program modules, or other data. Example types of computer-readable data storage media include, but are not limited to, RAM, ROM, EPROM, EEPROM, flash memory or other solid-state memory technology, CD-ROMs, digital versatile discs ("DVDs"), other optical storage media, magnetic cassettes, magnetic tape, magnetic disk storage or other magnetic storage devices, or any other medium which can be used to store the desired information and which can be accessed by the server device 150.

According to various embodiments of the invention, the server device 150 may operate in a networked environment using logical connections to remote network devices through network 108, such as a wireless network, the Internet, or another type of network. The server device 150 may connect to network 108 through a network interface unit 404 connected to the system bus 422. It should be appreciated that the network interface unit 404 may also be utilized to connect to other types of networks and remote computing systems. The server device 150 also includes an input/output controller 406 for receiving and processing input from a number of other devices, including a touch user interface display screen or another type of input device.

As mentioned briefly above, the mass storage device 414 and the RAM 410 of the server device 150 can store software instructions and data. The software instructions include an operating system 418 suitable for controlling the operation of the server device 150. The mass storage device 414 and/or the RAM 410 also store software instructions and applications 424, that when executed by the CPU 402, cause the server device 150 to provide the functionality of the server device 150 discussed in this document.

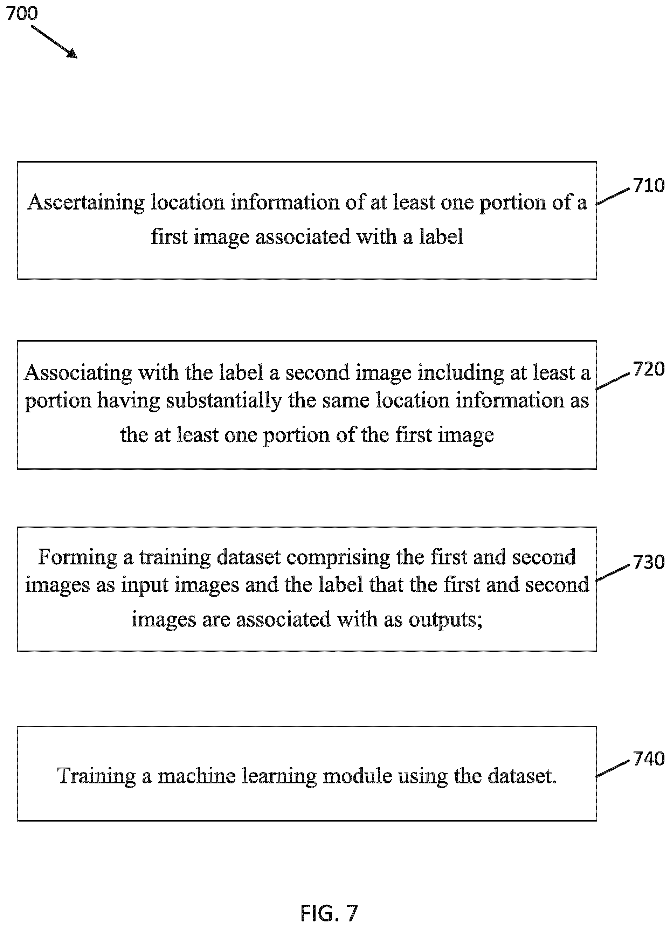

Fig. 7 illustrates a method 700 for training a machine learning device according to some embodiments. In this example, the method 700 includes: ascertaining 710 geographic location information of at least one portion of a first image associated with a label; associating 720 with the label a second image including at least a portion having substantially the same geographic location information as the at least one portion of the first image; forming 730 a training dataset comprising the first and second images as input images and the label that the first and second images are associated with as outputs; and training the machine learning device using the dataset 740.

Certain example methods and systems disclosed herein leverage existing knowledge of relationships, such as common locations, between images to simplify the process of assigning labels to the images, thereby efficiently augmenting training datasets for machine learning. As obtaining training datasets sufficiently large datasets is important for building well-trained machine learning models and is often a time- and resource-intensive part of building such models, the methods and systems disclosed herein can be used to improve the performance of machine learning models more economically.

Although various embodiments are described herein, those of ordinary skill in the art will understand that many modifications may be made thereto within the scope of the present disclosure. Accordingly, it is not intended that the scope of the disclosure in any way be limited by the examples provided.

The term "comprising" is used herein in order not to exclude additional non-cited features. The skilled person understands though that in practice the invention also works in the absence of any additional non-cited feature and that the term "comprises" may be substituted with the terms "consisting of". Further aspects of the invention therefore are as follows:
Aspect 1: A method for augmenting training data for training a machine learning model, the method consisting of:
   obtaining a first image with geographic location information and associated with a label;
   associating with the label a second image including at least a portion having substantially the same geographic location information as the at least one portion of the first image;
   forming a training dataset consisting of the first and second images as input images and the label that the first and second images are associated with as outputs;
   possibly forming a third image by mirroring or rotating the first image or adding artificial noise to the first or second image;
   associating the third image with the label; and
   wherein forming the training dataset then consists in including the third image as an input image and the label that the third image is associated with as an output ; and
   training the machine learning model using the augmented training dataset.
Aspect 2: The method of aspect 1, wherein the geographic location information of the at least one portion of the first image consists of geographic location information of the at least one portion of the first image.
Aspect 3: The method of aspect 1 or 2, wherein the first and second images are acquired under different conditions.
Aspect 4: The method of aspect 3, wherein the different conditions include time, lighting, angle of view, or image resolution.
Aspect 5: The method of any of aspects 1 - 4, wherein the geographic location information of the respective portions of the first and second images consists of two-dimensional (or higher) coordinates.
Aspect 6: The method of any of aspects 1 - 5, wherein the forming the training dataset consists of selecting or rejecting a candidate image as the second image based on a degree of similarity between the candidate image and the first image.
Aspect 7: The method of any of aspects 1 - 6, wherein the first and second images are substantially mutually spatially registered.
Aspect 8: A computer readable medium that stores a set of instructions which when executed perform a method for training a machine learning device, in accordance with any of aspects 1 to 7.
Aspect 9: A system for augmenting a label consisting of:
   a non-transitory memory storage; and
   a processing unit coupled to the non-transitory memory storage, wherein the processing unit is operative to execute a set of instructions read from the non-transitory memory storage to:
      ascertain geographic location information of at least one portion of a first image associated with a label;
      associate with the label a second image including at least a portion having substantially the same geographic location information as the at least one portion of the first image;
      form a training dataset consisting of the first and second images as input images and the label that the first and second images are associated with as outputs;
   the processing unit is possibly further operative to, upon executing a set of instructions stored on the non-transitory memory storage:
      form a third image by mirroring or rotating the first image or adding artificial noise to the first or second image; and
      associate the third image with the label; and
         train a machine learning device using the dataset, wherein forming the training dataset then consists in including the third image as an input image and the label that the third image is associated with as an output.
Aspect 10: The system of aspect 9, wherein the geographic location information of the respective portions of the first and second images consists in three-dimensional coordinates.
Aspect 11: The system of any of aspects 9 - 10, wherein the forming the training dataset consists in selecting or rejecting a candidate image as the second image based on a degree of similarity between the candidate image and the first image.
Aspect 12: The system of any of aspects 9 - 11, wherein the geographic location information of the at least one portion of the first image consists in geographic location information of the at least one portion of the first image.
Aspect 13: The system of any of aspects 9 - 12, wherein the first and second images are substantially mutually registered.

## Claims

1. A method for augmenting training data for training a machine learning model, the method comprising:
obtaining a first image with geographic location information and associated with a label;
associating with the label a second image including at least a portion having substantially the same geographic location information as the at least one portion of the first image;
forming a training dataset comprising the first and second images as input images and the label that the first and second images are associated with as outputs; and
training the machine learning model using the augmented training dataset.

2. The method of claim 1, wherein the geographic location information of the at least one portion of the first image comprises geographic location information of the at least one portion of the first image.

3. The method of claim 1 or 2, wherein the first and second images are acquired under different conditions.

4. The method of claim 3, wherein the different conditions include time, lighting, angle of view, or image resolution.

5. The method of any of claims 1 - 4, wherein the geographic location information of the respective portions of the first and second images comprise two-dimensional (or higher) coordinates.

6. The method of any of claims 1 - 5, wherein the forming the training dataset comprise selecting or rejecting a candidate image as the second image based on a degree of similarity between the candidate image and the first image.

7. The method of any of claims 1 - 6, further comprising:
forming a third image by mirroring or rotating the first image or adding artificial noise to the first or second image; and
associating the third image with the label;
wherein forming the training dataset further comprises including the third image as an input image and the label that the third image is associated with as an output.

8. The method of any of claims 1 - 7, wherein the first and second images are substantially mutually spatially registered.

9. A computer readable medium that stores a set of instructions which when executed perform a method for training a machine learning device, in accordance with any of claims 1 to 8.

10. A system for augmenting a label comprising:
a non-transitory memory storage; and
a processing unit coupled to the non-transitory memory storage, wherein the processing unit is operative to execute a set of instructions read from the non-transitory memory storage to:
ascertain geographic location information of at least one portion of a first image associated with a label;
associate with the label a second image including at least a portion having substantially the same geographic location information as the at least one portion of the first image;
form a training dataset comprising the first and second images as input images and the label that the first and second images are associated with as outputs; and
train a machine learning device using the dataset.

11. The system of claim 10, wherein the geographic location information of the respective portions of the first and second images comprise three-dimensional coordinates.

12. The system of any of claims 10 - 11, wherein the forming the training dataset comprise selecting or rejecting a candidate image as the second image based on a degree of similarity between the candidate image and the first image.

13. The system of any of claims 10 - 12, wherein the geographic location information of the at least one portion of the first image comprises geographic location information of the at least one portion of the first image.

14. The system of any of claims 10 - 13, the processing unit is further operative to, upon executing a set of instructions stored on the non-transitory memory storage:
form a third image by mirroring or rotating the first image or adding artificial noise to the first or second image; and
associate the third image with the label;
wherein forming the training dataset further comprises including the third image as an input image and the label that the third image is associated with as an output.

15. The system of any of claims 10 - 14, wherein the first and second images are substantially mutually registered.
